# EUROPEAN PATENT SPECIFICATION

(11) **EP 1 531 408 B1**
(45) Date of publication and mention of the grant of the patent: **12.03.2008**
(21) Application number: 04300260.9
(22) Date of filing: 07.05.2004
(51) Int. Cl.: G06F 17/30, G11B 27/00

(54) **Method for seamless real-time splitting and concatenating of a data stream**
Verfahren für das nahtlose Aufteilen und Verketten eines Datenstromes in Echtzeit
Méthode pour se diviser et concatener en temps réel de facon homogène un flux de données

(30) Priority: 21.08.2003 EP 03018986
(43) Date of publication of application: 18.05.2005
(73) Proprietor: Thomson Licensing, 92100 Boulogne-Billancourt (FR)
(72) Inventor: Klausberger, Wolfgang, 30519 Hannover (DE); Blawat, Meinolf, 30659 Hannover (DE); Kubsch, Stefan, 31559 Hohnhorst (DE); Li, Hui, Dr., 30419 Hannover (DE); Hepper, Dietmar, 30419 Hannover (DE)
(74) Representative: Rittner, Karsten

(56) References cited:
- EP-A- 0 695 062
- EP-A- 0 917 376
- EP-A- 0 942 416
- EP-A- 1 211 688
- US-A- 6 134 596
- US-B1- 6 272 088

## Description

### Field of the invention

This invention relates to a method for distributed storage and retrieval of data streams. In particular it relates to seamless real-time splitting and concatenating of data streams, e.g. multimedia data streams.

### Background

Multimedia home networks are often used to process data streams containing audio, video and other data. This includes recording and replaying large amounts of data. Usually a data stream that contains a unit, like a video film or an audio track, is handled as a single file, and stored as such. Internally, these streams are often structured into packets, like e.g. defined for Digital Video (DV), or in the MPEG-2 standard. Depending on the standard, these packets may have different lengths, e.g. 188 bytes for MPEG-2.

While data amounts as well as available storage capacity increase drastically, organizing the storage area is an annoying task for the user. Various automation approaches exist, like e.g. storage-area networks that are used to separate storage devices from other devices, thus offering storage capacity to all connected data generating or data consuming devices. Such techniques are called distributed storage, since they may automatically distribute a file that shall be stored to any of the connected storage devices, and find and retrieve it later. In such systems the user usually does not need to know in detail where certain content is stored. To be able to handle various types of application packets, distributed storage systems for multimedia networks often put the application packets into packet containers for storage, like e.g. defined for the DVD Stream Recording standard "DVD Specifications for Rewritable/Re-recordable Discs, Part 5, Stream Recording, May 2000". To enable proper real-time playback, timestamps (ATS) are assigned to the application packets.

Distributed storage methods may also be applied for home networks, which tend to become convenient automatic storekeepers for various kinds of data. The system may look without any user intervention autonomously for a storage device that may provide enough storage capacity for recording. For the application, e.g. video recording, this behavior of the storage system is usually transparent.

However, when real-time streaming data shall be recorded, it is in general not possible to know in advance the size of the data stream, and thus the required storage area. Therefore storage area management is difficult, so that recording of real-time data is usually terminated when the selected storage device is full.

The architecture of distributed storage systems, like networks in general, can be based on either client-server or peer-to-peer (P2P) principles. P2P networks require no central network organization, since the nodes, or peers, usually communicate directly with each other. Services and resources, e.g. storage area, may be shared, thus offering numerous enhanced functions to the user.

EP1211688 discloses an information recording device which handles a plurality of recording surfaces. When the remaining capacity of a first recording surface is below a threshold, parallel recording of a data portion onto a hard disk is performed until a new recording surface is provided. When the actual recording is finished, the data portion is recorded in a post-processing step onto the new recording surface.

EP0942416 shows the recording of data in the residual recording capacity of recording media, wherein one of a plurality of disks is selected for recording, based on its residual capacity and on a calculation of required disk space corresponding to a known recording time.

US6134596A discloses scheduling network resources to play multiple files, thus enabling seamless playback of data from a plurality of recorded media, for the purpose of declustering. A scheduler maintains a network schedule that provide a relative ordering of transmission times by instructing the appropriate data servers to read and deliver data when approaching the scheduled time.

### Summary of the Invention

A distributed storage system for multimedia home networks should be able to support real-time recording of streaming data. Since due to the nature of real-time recording the length of a recorded file, or data stream, is not known at recording time, there is the risk of the selected storage device being full before the data stream is completely stored. In that case the remaining part of the data stream may be stored on another storage device. Anyway, selecting and activating the other storage device takes time, which hampers real-time behavior.

The problem to be solved by the invention is to split a data stream seamlessly into chunks while recording it, and distribute the chunks in real-time to different connected storage devices, so that the chunks can be seamlessly concatenated again in real-time for replaying the stream.

A method to solve this problem is disclosed in claim 1. An apparatus that utilizes the method for storing is disclosed in claim 9. A method for retrieving the portions of a data stream from different storage media is disclosed in claim 3. An apparatus that utilizes the method for data retrieval is disclosed in claim 10.

According to the invention, metadata tags and temporary buffers are used to enable seamless real-time splitting and concatenating of data in a distributed storage environment. When the maximum capacity of a storage device is reached while a data stream is being recorded on it, the inventive method makes it possible to split the stream and store the remainder on another storage device. The storage capacity that is available on the recording storage node and on the other storage nodes of a network may be monitored for this purpose.

While a data stream is recorded on a first storage device, and the available storage capacity on this device comes to a limit, it sends a request for more storage area to one or more other storage devices in the network, receives one or more answers from the other storage devices and selects, based on these answers, another storage device that is suitable for continuing the recording later on, after the currently active storage device is full. When the remaining free storage area of the first device is below a threshold, the other storage device gets a notification and starts buffering the streaming data in a temporary buffer, in parallel to the first storage device. When the first storage device is full, i.e. it may store no more packets, it sends to the second device a notification containing an identifier that defines the last packet stored by the first device. Upon reception of this notification, the second device identifies the first packet that it has to store, and transfers this start packet and the successive data packets from its temporary buffer to its storage area. Thus it can continue recording the data stream.

Advantageously the method prevents data loss, and thus prevents noticeable interruption at playback of the stream.

The process of selecting another storage device to continue the recording may be based on any parameters, like e.g. free storage capacity, possible recording speed or type of content.

Similarly, for replaying the complete data stream the different chunks are concatenated. The first chunk, containing the beginning of the stream, is marked as such by a metadata tag. This mark may be explicit or implicit by specifying no predecessor. The metadata tag also contains an identifier, e.g. a timestamp value or UUID, of the last application packet contained in the related data chunk. It may also contain an identifier of the storage device that holds the next chunk, and an identifier of the next or the previous chunk or both, e.g. PlaycellUUID. While the first chunk is read from the storage device and buffered for replaying, its metadata tag is evaluated and a message is sent at least to the next storage device, identifying the last packet of the first chunk, and identifying the next chunk. After the second storage device detected that it has the required chunk, e.g. with the PlaycellUUID, it monitors the data packets replayed by the first device on the common data connection, and when it detects the last packet, it starts replaying the packets of the second chunk. Depending on the length of the single data chunks, the second device may receive the message early enough to read the first packets of its data chunk in advance and buffer them in a temporary buffer, so that replaying can start without delay created by data retrieval from the second storage medium. Alternatively, the message sent to the second device may contain the identifier of the currently replayed chunk, e.g. its PlaycellUUID, and the metadata tag of the second chunk stored on the second device contains the identifier of its preceding chunk. When the identifiers are equal, the second chunk is the next chunk to be replayed, after the last packet of the first chunk, detected by its ATS.

Thus, a real-time data stream may be broken into data chunks that may be stored on different devices, and that can be concatenated seamlessly for playback. To handle such concatenated streams in a distributed storage system, the inventive method comprises describing the complete sequence of data chunks by metadata descriptors that are generated automatically by the decentralized distributed system and then associated with the data chunks as navigation data, thus generating a linked list of data chunks. According to the invention, the metadata descriptors contain for each chunk at least all the information that is required for reconstruction of the original stream, e.g. for replaying the data. The metadata descriptors contain at least the following information: an identifier for the data stream to which the data chunk belongs, an identifier for the preceding data chunk if one exists, an identifier for the successive data chunk if one exists, and an identifier for the last packet. Further, it may appear useful to store the following information in the metadata descriptors: identifier for the storage device that is expected to hold the preceding/successive chunk, date and time of recording, title of data stream, and timestamps of the first and/or the last packet, e.g. ATS. These metadata descriptors may contain hierarchy, e.g. when the chunk related metadata descriptors refer to another, stream related metadata descriptor.

Advantageous embodiments of the invention are disclosed in the dependent claims, the following description and the figures.

### Brief description of the drawings

Exemplary embodiments of the invention are described with reference to the accompanying drawings, which show in
Fig.1 distributed stream objects being linked by metadata descriptors;
Fig.2 a distributed storage system model in the case of recording;
Fig.3 a messaging and buffering scenario when seamlessly switching from a storage device to another while recording;
Fig.4 a distributed storage system model in the case of playback;
Fig.5 a messaging and buffering scenario when seamlessly switching from a storage device to another during playback;
Fig.6 a distributed storage system model in the case of playback, routing all chunks via one node; and
Fig.7 a distributed storage system model in the case of playback, with an input buffer at a non-storage node.

### Detailed description of the invention

The following description of exemplary embodiments of the inventive method is based on the DVD Stream Recording standard, but the method can as well be used for data according to any other standard for stream recording.

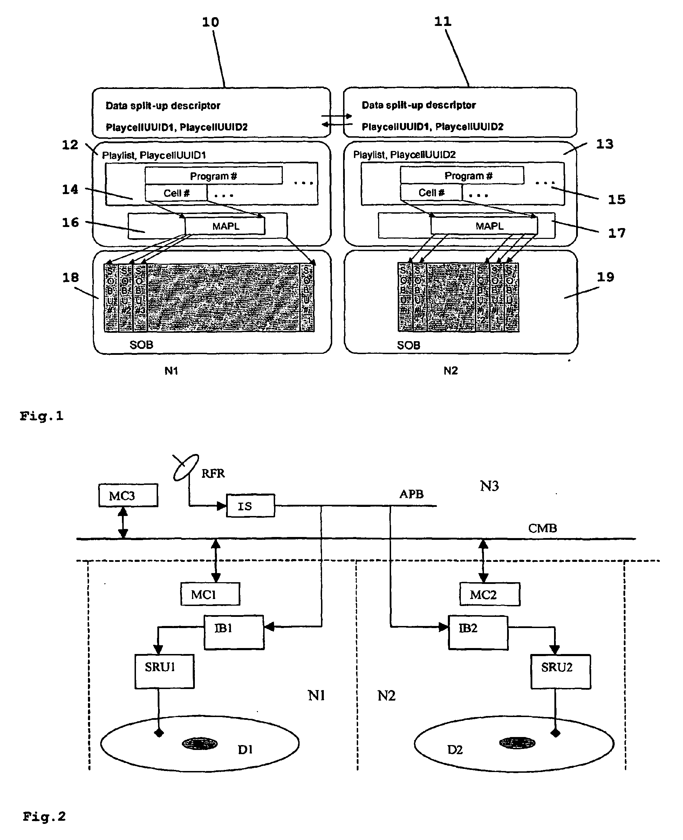

Fig.1 shows an exemplary embodiment of the invention, being a distributed storage system that stores distributed stream objects linked by metadata descriptors. In this case, two nodes *N1,N2* are involved in the storage of a data stream that is composed of multiple units *SOBU#1,...,SOBU#j,* and that is split into two data chunks *18,19.* The DVD Stream Recording standard defines Stream Objects (SOB) consisting of Stream Object Units (SOBU) of 64kB length, each as a container for variable length application packets. In Fig.1, a first storage device *N1* records a stream *18* containing SOBUs *SOBU#1,..., SOBU#i-1,* as long as it has storage area available. While recording, it also generates and stores an information file *12* referring to the stream object *18* and containing the playlists and playcells labeled with unique labels *PlaycellUUID1,PlaycellUUID2,* and other navigation information 14, e.g. for the program. The information file *12* also contains a Mapping List (MAPL) *16* for navigation purposes. In the MAPL, the arrival time intervals for each SOBU are captured. It is used to convert these times into the address of the corresponding SOBU, which contains the application packet with the specified packet arrival time. Playlists contain start and end time of one or more playcells. Further, a metadata descriptor *10* is generated and attached to the information file *12* or the stream object *18* respectively. Initially, the metadata descriptor *10* contains the playcell label *PlaycellUUID1.*

While the first storage device *N1* is recording, other connected storage devices may be monitored for available storage capacity. Alternatively, e.g. a broadcast message may be sent to all connected storage devices, requesting storage area. One of these storage devices *N2* is selected as potential successor of the currently active device *N1.* Then, if the storage capacity limit of the first storage device *N1* is reached while the stream continues, the other storage device *N2* is activated to continue recording of the stream. This device *N2* gets a notification about the ATS of the last application packet that was stored in the first storage device *N1,* being contained in the last stored unit *SOBU#i-1.* The second storage device *N2* continues storage of the stream in another stream object *19*, being composed of the units *SOBU#i,...,SOBU#j* following the last unit *SOBU#i-1* stored by the first device *N1,* wherein this stream object 19 contains the subsequent application packets. The second storage device generates for this stream object *19* an information file *13* containing a MAPL *17* and identifiers *15*, and a metadata descriptor *11*. The metadata descriptor *11* contains not only the playcell labels *PlaycellUUID1,PlaycellUUID2* but also a pointer to the metadata descriptor *10* of the other storage device *N1* storing the preceding data chunk, i.e. stream object *18.* Likewise, the metadata descriptor *10* in the first storage device *N1* is updated such that it contains a pointer to the second storage device *N2.*

In one embodiment of the invention the metadata descriptors *10,11* may also contain detailed information about where the preceding and/or successive SOB is stored, e.g. address, file name or path name.

One requirement for the distributed storage system is the automatic self-organizing of file splitting when the storage capacity limit of a node is reached. In P2P networks, a self-controlled exchange of messages between the nodes is used for this task. Fig.2 depicts a simplified distributed storage system model with two storage nodes *N1,N2* and a separate node *N3* for the input service *IS*, in the case of recording. Exemplarily, the nodes are assumed to be peers in a P2P network, so that the bus connections between nodes mentioned in the following are virtual connections, using the same physical connection. Data are received e.g. via a radio frequency receiver *RFR.* An input service *IS*, e.g. a decoder, in the receiver node *N3* extracts the application packets, captures timestamps and distributes the packets on an application packet bus *APB* to the storage nodes *N1,N2.* The storage nodes *N1,N2* are equipped with interfaces to the application packet bus *APB,* input buffers *IB1,IB2* and stream recording units *SRU1,SRU2* that generate navigation information of the streaming data, and pack the application packets into streaming packets according to the utilized stream recording standard, e.g. SOBUs for the DVD Stream Recording standard. The stream recording units *SRU1,SRU2* in each storage node may access storage media *D1,D2,* e.g. optical discs or hard-disks, where they may store the streaming packets. The nodes *N1...N3* have message controllers *MC1...MC3* that are connected to a common control message bus *CMB,* so that the nodes can exchange control messages and thus organize recording and file splitting if necessary.

According to the DVD Stream Recording standard, time information has to be added to every application packet to enable proper real-time playback of stored transport packets. This capturing of application timestamps (ATS) can be performed e.g. by the input service IS that receives and decodes a transport stream from the receiver RFR. The input buffers *IB1,IB2* of the storage nodes *N1,N2* are used to bridge the timeframe for switching from one node to another when file splitting becomes necessary. Though not depicted in Fig.2, it may also be advantageous to use any transparent network protocol for the application packet bus *APB*, adding error correction data or the like.

Further, control messages between the two storage nodes *N1,N2* are exchanged, containing the identifiers, or UUIDs, of the generated playcells. Those UUIDs are used to describe the splitting of the stream, and are written into the metadata descriptor of the stream object at the related nodes. The metadata descriptor is in this example stored on the same medium as the stream object. If the DVD Stream Recording standard mentioned above is used, the Application Private Data Field can be used as container for the metadata descriptors.

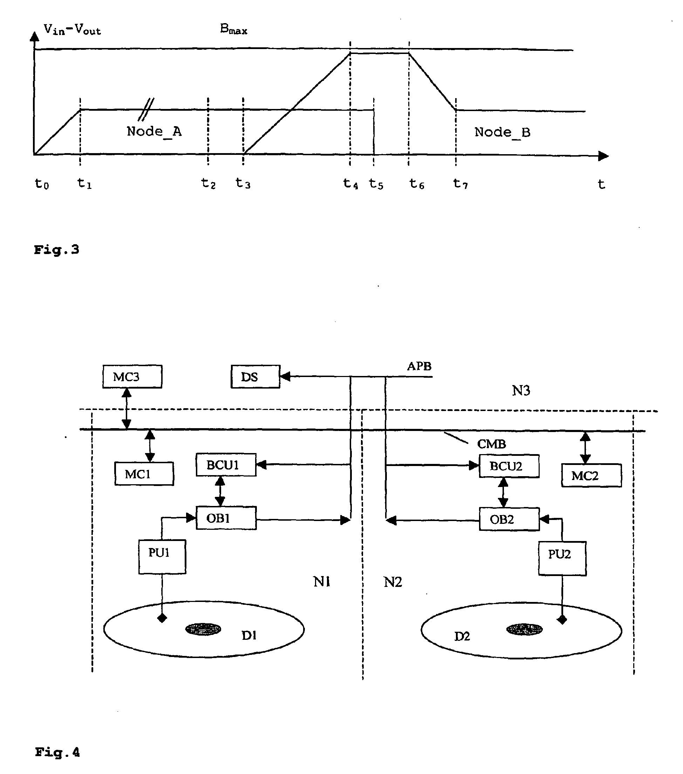

A buffer scenario shown in Fig.3 explains the switching from one node to another in the case of recording a stream. In this exemplary scenario the buffering of a data stream in an input buffer has been initially started at a first node *Node_A,* at a time t₀. The input buffer filling Vᵢₙ-Vₒᵤₜ increases until at time t₁ the recording of buffered data on a mass storage medium starts. Emptying the buffer and recording the buffered data is usually faster than receiving and buffering new data, so that the buffer filling will oscillate around an average value, but for this simplified figure it is assumed that the buffer filling remains constant. The storage node *Node_A* monitors its own remaining free storage capacity. When it notices at time t₂ that its capacity will be reached soon, the node *Node_A* sends a message with a "call for free capacity" to some or all other connected nodes. A second node *Node_B* is chosen as a successor. In P2P networks this may be done in a negotiation process. In other cases another unit, e.g. a main server, may select a successor node. When the second node *Node_B* is selected and notified at time t₃, it starts to buffer the input stream in its input buffer, as a stand-by node in parallel to the active storage node *Node_A.* Since the buffered data in the stand-by node *Node_B* are not yet being recorded, the buffer filling increases. When the buffer is almost full at time t₄, before a "full" message from the active node *Node_A* is received, the oldest buffered data may be overwritten, like e.g. in a ring buffer. During this time the buffer filling is constant since the buffer remains full, or almost full.

When the first node *Node_A* has no free storage capacity left, it stops recording and sends a "full" message to the stand-by node *Node_B* at time t₅. This message includes the application timestamp (ATS) value of the last recorded application packet. After some time, at the time t₆, the stand-by node *Node_B* has received this message and finished its storage configuration. From now on it is considered the active node. It evaluates the ATS included in the message and starts recording buffered application packets that have a higher ATS than the ATS contained in the message. Other application packets are dropped.

The recording process includes reading the application packets from the input buffer, packing them in streaming packets according to the employed streaming standard and writing the streaming packets to the storage medium, e.g. disk. Thus, the buffer filling decreases until at a time t₇ it has reached an average level, as described above. This level may e.g. be programmed or hardware-defined. The size of the input buffer *Bₘₐₓ* has to be sufficient for bridging the time between the first node *Node_A* sending the "full" message at t₅ and the second node *Node_B* beginning the recording at t₆. This time includes also the mentioned messaging and the preparation and configuration of the recording process at the second node *Node_B.* The buffer must be able to hold all application packets received during this timeframe.

For continuous playback of the streaming data stored in a distributed storage system, output buffers are necessary to bridge the time slot when switching between nodes. Fig. 4 demonstrates a simplified distributed storage system model in the playback case, with two storage nodes *N1,N2* and one node *N3* for the display service *DS*, e.g. a monitor. The storage nodes *N1,N2* are equipped with interfaces for the application packet bus *APB*, output buffers *OB1,OB2,* buffer control units *BCU1,BCU2* and playback units *PU1,PU2* being connected to storage media *D1,D2.* The playback units *PU1,PU2* convert the streaming packets that are read from the storage media *D1,D2* back to application packets. Furthermore, all nodes contain message controllers *MC1...MC3* that may exchange control messages on a control message bus *CMB.* The output buffers *OB1,OB2* have two functions: first to continuously provide application packet data while switching between nodes, and second to match the data rate supplied by the playback units *PU1,PU2* with the required application packet data rate. If e.g. data read from a storage medium *D1* on a first node *N1* are played back, then a metadata tag associated with the respective playlist may indicate that the stream is not completely stored on this medium *D1,* but a successive chunk of the same stream is stored on another node *N2.* The metadata tag also includes the ATS of the last stored application packet, and an identifier of the other playcell. It may also include more detailed information about where the data are stored.

While the first node *N1* plays back its data chunk on a common connection, e.g. application packet bus *APB*, the message controller *MC1* sends a message to the other nodes message controller *MC2*, requesting preparation for playback of the respective successive data stream. Upon reception of this message, the other node *N2* may start reading the data from its storage medium *D2* and buffer the application packets in its output buffer *OB2* until the message controller *MC2* receives an "empty" message from the active node *N1.* When the active playback unit *PU1* has written its last application packet to its output buffer *OB1,* the active node *N1* sends an "empty" message to the other node *N2.* Upon reception of this message, the other node *N2* becomes the active node. Then the second node *N2* monitors the ATSs of the application packets on the bus *APB,* using its buffer control unit *BCU2.* When the last packet is detected, the buffer control unit *BCU2* enables the output buffer *OB2* to output its contents on the bus *APB,* and also enables the playback unit *PU2* to read more data from the storage medium *D2* into the output buffer *OB2.*

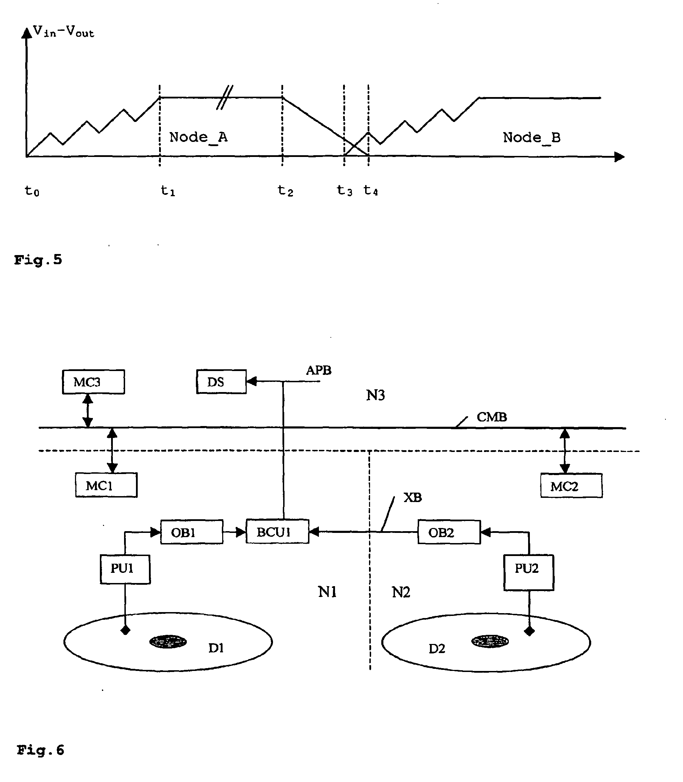

A buffer scenario shown in Fig.5 explains for distributed stream recording the switching from one node to another, in case of playback operation.
The playback of a stream has been initially started at a first node *Node_A* at time to. Depending on the used buffer filling strategy, a fast disc reading process can lead to a bursty data behavior, indicated as variable buffer filling, before the buffer reaches a quasi-stable state at time t₁. Due to the mentioned data bursts the buffer filling always varies around this quasi-stable state, as mentioned above. From the metadata descriptor that characterizes the stream splitting, the first node *Node_A* knows, or may find out by a request, which other node *Node_B* is the successor node that holds the next part of the streaming data. At time t₂ the last packet was read and buffered at the active node *Node_A,* and it sends a "call for the successor node" message to the other node *Node_B,* including the timestamp value of the last application packet. The successor node *Node_B* receives the message, prepares the playback process and starts to buffer application packets at time t₃. The filling of its output buffer *OB2* increases from now on. To achieve seamless playback when switching between nodes, the successor node *Node_B* reads from the application packet bus *APB* the application packets sent by the active node *Node_A* and evaluates the timestamps. The buffer control unit *BCU2* compares these ATSs with the ATS from the "call for successor node" message. When these timestamps are equal, meaning that the output buffer *OB1* of the first node *Node_A* is empty at time t₄, the output buffer *OB2* starts to transmit its packets to the bus *APB* after the end of the current packet, so that the display service *DS* in the display node *N3* receives the application packets seamlessly from the two storage nodes N1*,N2.* The size of the output buffers *OB1,OB2* is calculated such that the time for the messaging and the configuration of the playback process in the successor node may be bridged.

In the following, two other embodiments of the invention, being solutions for seamless playback of distributed chunks of a stream, are described.

Fig. 6 shows a simplified distributed storage system model for playback with two storage nodes *N1,N2* and one node *N3* for the display service. Correspondingly this model may also be used for recording. In this model all parts of the stream are routed via one node *N1,* and only one buffer control unit *BCU1* is active. Only this node controls the seamless playback of the stream, while the other node *N2* sends its application packets not to the application packet bus *APB,* but to the active buffer control unit *BCU1.* As mentioned above, in the case of P2P networks this virtual extension bus XB is the same physical connection.

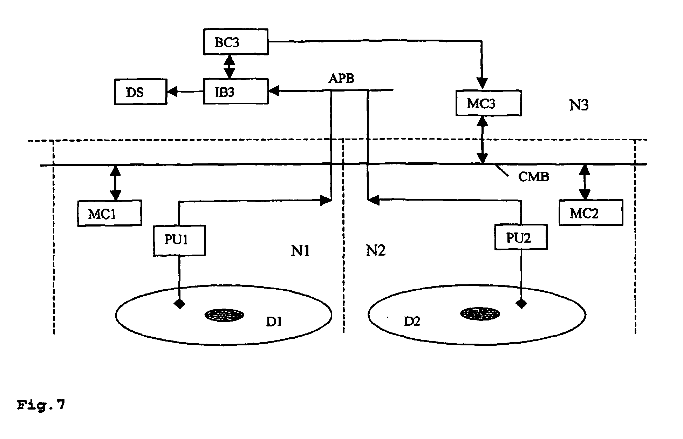

Similarly, Fig. 7 shows another simplified distributed storage system model for playback with two storage nodes *N1,N2* and one node *N3* for the display service. In this model the buffering is performed at the display service node *N3*, which controls the seamless playback of the stream. With this solution it is necessary to buffer data at the non-storage node. A message controller *MC3* at the display service node *N3* receives a message from the active storage node *N1,* indicating the ATS of its last application packet. A buffer control unit *BCU3* monitors the timestamps of the buffered application packets, and when reception of the last packet from the active storage node *N1* was detected, a message is sent to the message controller *MC2* of the successor node *N2*, which in turn begins to retrieve application packets from its storage medium *D2* and send it to the input buffer *IB3* of the display service node *N3.* The input buffer *IB3* must be able to hold enough application packets to bridge the required messaging and data retrieval time.

The inventive method may also be used in systems where a monotonous series of numbers, e.g. sequence numbers, are used instead of time stamps for the identification of application data packets. In this case the numbers must be long enough to prevent misinterpretation after wrap-around, e.g. 32 bit like for TCP/IP packets.

In one embodiment of the invention the different storage devices are located within the same device, e.g. multiple hard-disks or other magnetic discs within one multimedia recorder.

In one embodiment of the invention the recording may be done such that the second storage device gets no message about when to start buffering data. Instead it buffers the input data continuously. In this case it is sufficient to receive a message that identifies the first buffered application packet to be stored.

In one embodiment of the invention the metadata descriptor contains an identifier for the storage device that is expected to hold the preceding and/or successive chunk.

In one embodiment of the invention the metadata descriptor may also contain detailed information about where the preceding and/or successive chunk is stored, e.g. address, file name or path name.

In one embodiment of the invention the data stream may be split not only when the first storage medium is full, but also due to other reasons, e.g. recording problems in the first storage device.

The inventive method is suitable for storing and retrieving any data stream that is composed of identifiable units, like packets with identifiers, on a plurality of storage devices. Further, the data retrieval may serve any purpose, e.g. copying, encoding, transmitting or replaying.

## Claims

1. A method for storing an incoming data stream, the data stream being composed of identifiable data units, comprising the steps of
- in a first storage device (N1) storing a first portion of the data stream (18) on a first storage medium (D1), and creating and storing a first data set (10) associated to the first portion of the data stream (18), the data set (10) containing an identifier (PlaycellUUID1) for the first portion of the data stream;
- sending a request for a storage area from the first storage device (N1) to one or more other storage devices in order to receive data from said one or more other storage devices;
- receiving in the first storage device (N1) one or more answers from the one or more other storage devices;
- selecting a second storage device (N2) from the one or more other storage devices from which the answer was received;
- when the remaining free storage area of the first device (N1) is below a threshold, buffering in parallel to the first storage device (N1) in the selected second storage device (N2) the incoming data stream on the second storage medium (IB2);
- when the first storage device (N1) is full, sending (CMB) from the first storage device (N1) to the second storage device (N2) an identifier for the last data unit (SOBU#i-1) stored on the first storage medium (D1), and storing the identifier together with the first data set (10) in the first storage device (N1);
- detecting in the second storage medium (IB2) in the second storage device (N2) the identifier for the last data unit (SOBU#i-1) stored on the first storage medium (D1) within said stored data stream;
- upon said detection, storing on a third storage medium (D2) in the second storage device (N2) a second portion of the data stream (19) containing subsequent data units, and creating and storing a second data set (11) associated to the second portion of the data stream (19), the data set (11) containing an identifier (PlaycellUUID2) for the second portion of the data stream; and
- storing at least one of the identifiers (PlaycellUUID1,PlaycellUUID2) together with the other data set (10,11) in the other storage device (N1,N2).

2. Method according to claim 1, wherein the step of selecting a second storage device (N2) from the one or more other storage devices is based on free storage capacity, possible recording speed or type of content to be stored.

3. A method for retrieving successive portions of a contiguous data stream from a plurality of storage devices, the data stream being composed of identifiable data units like packets, comprising the steps of
- retrieving a first portion of the data stream from a first storage device (N1), and transmitting it on an output bus (APB);
- retrieving in the first storage device (N1) a data set (10) associated with the first portion of the data stream, the data set containing a first and a second identifier, the first identifier being an identifier (PlaycellUUID1) for the first portion of the data stream or an identifier (PlaycellUUID2) for a second portion of the data stream, and the second identifier being an identifier for the last data unit contained in said first portion of the data stream;
- sending (CMB) the first and second identifiers from the first storage device (N1) to the other of said plurality of storage devices;
- detecting in a second storage device (N2) that the second portion of the data stream identified by the received first identifier (PlaycellUUID1, PlaycellUUID2) is available for retrieval from a storage medium (D2);
- retrieving in the second storage device (N2) at least the beginning of said second portion of the data stream from a storage medium (D2) and ring it on another storage medium (OB2);
- monitoring in the second storage device (N2) the output connection (APB) of the first storage device (N1) ;
- based on said monitoring, detecting in the second storage device (N2) when said last data unit of the first portion of the data stream is transmitted on the output connection (APB); and
- upon said detection, reading the second portion of the data stream from said other storage medium (OB2) and transmitting it on the output connection (APB).

4. Method according to any of claims 1-3, wherein the data set (10) associated with the first portion of the data stream further contains an identifier for a second storage device (N2).

5. Method according to any of claims 1-4, wherein the storage media comprise memories (IB1,IB2,OB1,OB2) and optical or magnetic disks (D1,D2).

6. Method according to any of the previous claims, wherein the storage devices (N1,N2) are nodes in a network.

7. Method according to any of the previous claims, wherein the identifiable data units contain a monotonous series of numerical values or timestamps.

8. Method according to any of the previous claims, wherein the message sent from the first (N1) to the second (N2) storage device contains information about the storage location of the second portion of the data stream.

9. An apparatus for storing a data stream, the apparatus being a node in a decentralized network, the data stream being composed of identifiable data units, comprising
- a first storage medium (IB2) being a memory for buffering, upon reception of a notification, a part of the received data stream;
- means (SRU2) for transferring data read from the first storage medium (IB2) to a second storage medium (D2);
- means (MC2) for receiving from another node in said decentralized network a request for storage area, answering the request and receiving from said other node an identifier for the last data unit stored on said other node, the means (MC2) being also capable of sending a request for a storage area to one or more nodes in said decentralized network when the remaining free storage area on the second storage medium (D2) is below a threshold, receiving a plurality of answers from different devices and based on the evaluation of said answers selecting one of the answering devices;
- means for detecting if the data unit identified by said received identifier is stored in the first storage medium (IB2);
- means for initiating, upon detection of the data unit identified by said received identifier, the transfer of data units subsequent to said data unit from the first (IB2) to the second (D2) storage medium; and
- means for creating and storing a data set (11) associated to the data stream, the data set (11) containing an identifier (PlaylistUUID) for the data stream, an identifier for the last data unit stored on the second storage medium (D2) and an identifier of a data stream stored on said other node.

10. An apparatus for retrieving a portion of a data stream, wherein the apparatus is a node in a decentralized network, and wherein the data stream is composed of identifiable data units, comprising
- means (PU2) for reading data from a first storage medium (D2);
- a second storage medium (OB2) being a memory;
- means (MC2) for receiving from another node in said decentralized network a first identifier being an identifier for a first portion of the data stream stored on said other node, and a second identifier being an identifier for the last data unit contained in said first portion of the data stream;
- means for transferring data read from the first storage medium (D2) to the second storage medium (OB2), wherein the means initially transfers the beginning of the data stream read from the first storage medium to the second storage medium (OB2) upon detection that the second portion of the data stream identified by the received first identifier is available for retrieval from the first storage medium (D2);
- means (IB2) for receiving data from a data connection (APB);
- -means (BCU2) for monitoring said received data from the data connection (APB), detecting if the last data unit contained in said first portion of the data stream is received on the data connection (APB) and, upon said detection, initiating the transfer of data units from the second (D2) to the first (OB2) storage medium; and
- means for outputting data units from the first (OB2) storage, medium to said data connection (APB).

## Patentansprüche

1. Verfahren zur Speicherung eines ankommenden Datenstroms, der aus identifizierbaren Dateneinheiten besteht, umfassend die Schritte:
- Speichern eines ersten Teils des Datenstroms (18) auf einem ersten Speichermedium (D1) in einer ersten Speichervorrichtung (N1), und Erstellen und Speichern eines ersten Datensatzes (10), der dem ersten Teil des Datenstroms (18) zugeordnet ist, wobei der Datensatz (10) einen Identifizierer (PlaycellUUID1) für den ersten Teil des Datenstroms enthält;
- Senden einer Anforderung für einen Speicherbereich von der ersten Speichervorrichtung (N1) zu einer oder mehreren anderen Speichervorrichtungen, um Daten von der einen oder den mehreren anderen Speichervorrichtungen zu empfangen;
- Empfangen einer oder mehrerer Antworten von der einen oder den mehreren anderen Speichervorrichtungen in der ersten Speichervorrichtung (N1);
- Wählen einer zweiten Speichervorrichtung (N2) aus der einen oder den mehreren anderen Speichervorrichtungen, von der die Antwort empfangen wurde;
- wenn der verbleibende freie Speicherbereich der ersten Vorrichtung (N1) unter einem Schwellwert liegt, Zwischenspeichern des ankommenden Datenstroms auf dem zweiten Speichermedium (IB2) parallel zu der ersten Speichervorrichtung (N1) in der ausgewählten zweiten Speichervorrichtung (N2);
- wenn die erste Speichervorrichtung (N1) voll ist, Senden (CMB) eines Identifizierers für die letzte Dateneinheit (SOBU#i-1), die auf dem ersten Speichermedium (D1) gespeichert ist, von der ersten Speichervorrichtung (N1) zu der zweiten Speichervorrichtung (N2) und Speichern des Identifizierers zusammen mit dem ersten Datensatz (10) in der ersten Speichervorrichtung (N1);
- Feststellen in dem zweiten Speichermedium (IB2) in der zweiten Speichervorrichtung (N2) des Identifizierers für die letzte Dateneinheit (SOBU#i-1), die auf dem ersten Speichermedium (D1) in dem gespeicherten Datenstrom gespeichert ist;
- auf die Feststellung hin, Speichern eines zweiten Teils des Datenstroms (19), der nachfolgende Dateneinheiten enthält, auf einem dritten Speichermedium (D2) in der zweiten Speichervorrichtung (N2), und Erstellen und Speichern eines zweiten Datensatzes (11), der dem zweiten Teil des Datenstroms (19) zugeordnet ist, wobei der Datensatz (11) einen Identifizierer (PlaycellUUID2) für den zweiten Teil des Datenstroms enthält; und
- Speichern wenigstens eines der Identifizierer (PlaycelllUUID1, PlaycellUUID2) zusammen mit dem anderen Datensatz (10, 11) in der anderen Speichervorrichtung (N1, N2).

2. Verfahren nach Anspruch 1, bei dem der Schritt der Auswahl einer zweiten Speichervorrichtung (N2) aus der einen oder den mehreren anderen Speichervorrichtungen auf freier Speicherkapazität, möglicher Aufzeichnungsgeschwindigkeit oder Art von zu speicherndem Inhalt beruht.

3. Verfahren zum Wiedergewinnen aufeinanderfolgender Teile eines zusammenhängenden Datenstroms aus einer Mehrzahl von Speichervorrichtungen, wobei der Datenstrom aus identifizierbaren Dateneinheiten, wie Paketen, besteht, umfassend die Schritte:
- Wiedergewinnung eines ersten Teils des Datenstroms aus einer ersten Speichervorrichtung (N1) und seine Übertragung auf einem Ausgangs-Bus (APB);
- Wiedergewinnung eines dem ersten Teil des Datenstroms zugeordneten Datensatzes (10) in der ersten
Speichervorrichtung (N1), wobei der Datensatz einen ersten und einen zweiten Identifizierer enthält, von denen der erste ein Identifizierer (PlaycellUUID1) für den ersten Teil des Datenstroms oder ein Identifizierer (PlaycellUUID2) für einen zweiten Teil des Datenstroms ist, und von denen der zweite ein Identifizierer für die letzte, in dem ersten Teil des Datenstroms enthaltenen Dateneinheit ist;
- Senden (CMB) des ersten und zweiten Identifizierers von der ersten Speichervorrichtung (N1) zu der anderen der Mehrzahl von Speichervorrichtungen;
- Feststellen in einer zweiten Speichervorrichtung (N2), dass der von dem empfangenen ersten Identifizierer (PlaycellUUID1, PlaycellUUID2) identifizierte zweite Teil des Datenstroms für die Wiedergewinnung aus einem Speichermedium (D2) verfügbar ist;
- Wiedergewinnung wenigstens des Beginns des zweiten Teils des Datenstroms aus einem Speichermedium (D2) in der zweiten Speichervorrichtung (N2) und sein Zwischenspeichern auf einem anderen Aufzeichnungsmedium (OB2);
- Überwachen der Ausgangsverbindung (APB) der ersten Speichervorrichtung (N1) in der zweiten Speichervorrichtung (N2);
- Feststellen in der zweiten Speichervorrichtung (N2) auf der Basis der Überwachung (N2), wenn die letzte Dateneinheit des ersten Teils des Datenstroms auf der Ausgangsverbindung (APB) übertragen wird; und
- bei der Feststellung Lesen des zweiten Teils des Datenstroms aus dem anderen Speichermedium (OB2) und Übertragen von ihm auf der Ausgangsverbindung (APB).

4. Verfahren nach einem der Ansprüche 1 bis 3, bei dem der Datensatz (10) der dem ersten Teil des Datenstroms zugeordnet ist, ferner einen Identifizierer für eine zweite Speichervorrichtung (N2) enthält.

5. Verfahren nach einem der Ansprüche 1 bis 4, bei dem die Speichermedien Speicher (IB1, IB2, OB1, OB2) und optische oder magnetische Discs umfassen.

6. Verfahren nach einem der vorhergehenden Ansprüche, bei dem die Speichervorrichtungen (N1, N2) Knoten in einem Netzwerk sind.

7. Verfahren nach einem der vorhergehenden Ansprüche, bei dem die identifizierbaren Daten-Einheiten eine monotone Reihe von numerischen Werten oder Zeitstempeln enthalten.

8. Verfahren nach einem der vorhergehenden Ansprüche, bei dem die von der ersten (N1) zu der zweiten Speichervorrichtung (N2) gesendete Nachricht Informationen über den Speicherort des zweiten Teils des Datenstroms enthält.

9. Vorrichtung zur Speicherung eines Datenstroms, die ein Knoten in einem dezentralisierten Netzwerk ist, wobei der Datenstrom aus identifizierbaren Dateneinheiten zusammengesetzt ist, umfassend;
- ein erstes Speichermedium (IB2), das ein Speicher ist, zur Zwischenspeicherung eines Teils des empfangenen Datenstroms bei Empfang einer Mitteilung;
- Mittel (SRU2) zur Übertragung von aus dem ersten Speichermedium (IB2) gelesenen Daten zu einem zweiten Speichermedium (D2);
- Mittel (MC2) zum Empfang einer Anforderung eines Speicherbereichs von einem anderen Knoten in dem dezentralisierten Netzwerk, zur Beantwortung der Anforderung und zum Empfang eines Identifizierers für die letzte, in dem anderen Knoten gespeicherte Dateneinheit von dem anderen Knoten, wobei die Mittel (MC2) auch in der Lage sind, eine Anforderung eines Speicherbereichs an einen oder mehrere Knoten in dem dezentralisierten Netzwerk zu senden, wenn der verbleibende freie Speicherbereich auf dem zweiten Speichermedium (D2) unter einem Schwellwert ist, Antworten von einer Mehrzahl von verschiedenen Vorrichtungen zu empfangen, und auf der Basis der Auswertung der Antworten eine der antwortenden Vorrichtungen auszuwählen;
- Mittel zur Feststellung, ob die von dem empfangenen Identifizierer identifizierte Dateneinheit in dem ersten Speichermedium (IB2) gespeichert wird;
- Mittel, um bei Feststellung der von dem empfangenen Identifizierer identifizierten Daten die Übertragung von der Dateneinheit folgenden Dateneinheit von dem ersten (IB2) zu dem zweiten Speichermedium (D2) auszulösen; und
- Mittel zum Erstellen und Speichern eines dem Datenstrom zugeordneten Datensatzes (11), der einen Identifizierer (PlaylistUUID) für den Datenstrom, einen Identifizierer für die letzte, in dem zweiten Speichermedium (D2) gespeicherte Dateneinheit, und einen Identifizierer eines in dem anderen Knoten gespeicherten Datenstroms enthält.

10. Vorrichtung zur Wiedergewinnung eines Teils eines Datenstroms, die ein Knoten in einem dezentralisierten Netzwerk ist, wobei der Datenstrom aus identifizierbaren Dateneinheiten zusammengesetzt ist, umfassend:
- Mittel (PU2) zum Lesen von Daten aus einem ersten Speichermedium (D2);
- ein zweites Speichermedium (UB2), das ein Speicher ist;
- Mittel (MC2) zum Empfang eines ersten Identifizierers für einen ersten Teil des in dem anderen Knoten gespeicherten Datenstroms und eines zweiten Identifizierers für die letzte in dem ersten Teil des Datenstroms enthaltene Dateneinheit von einem anderen Knoten in dem dezentralisierten Netzwerk;
- Mittel zur Übertragung von aus dem anderen Speichermedium (D2) gelesenen Daten zu dem zweiten Speichermedium (OB2), wobei die Mittel zunächst den Beginn der aus dem ersten Speichermedium gelesenen Daten zu dem zweiten Speichermedium (OB2) bei der Feststellung übertragen, dass der zweite Teil des von dem empfangenen ersten Identifizierer identifizierten Datenstroms für die Wiedergewinnung aus dem ersten Speichermedium (D2) verfügbar ist;
- Mittel (IB2) zum Empfang von Daten von einer Datenverbindung (APB);
- Mittel (BCU2) zur Überwachung der von der Datenverbindung (APB) empfangenen Daten, zur Feststellung, ob die letzte, in dem ersten Teil des Datenstroms enthaltene Dateneinheit auf der Datenverbindung (APB) empfangen wird, und bei der Feststellung, zur Auslösung der Übertragung von Dateneinheiten von dem zweiten (D2) zu dem ersten Speichermedium (OB2); und
- Mittel zur Ausgabe von Dateneinheiten von dem ersten (OB2) Speichermedium zu der Datenverbindung (APB).

## Revendications

1. Une méthode permettant de stocker un flux de données entrant, le flux de données étant composé d'unités de données identifiables, comprenant les étapes consistant à
- dans un premier dispositif de stockage (N1), stocker une première partie du flux de données (18) sur un premier support de stockage (D1), et créer et stocker un premier ensemble de données (10) associé à la première partie du flux de données (18), l'ensemble de données (10) contenant un identifiant (PlaycellUUID1) de la première partie du flux de données ;
- envoyer une demande d'espace de stockage à partir du premier dispositif de stockage (N1) à un ou plusieurs autres dispositifs de stockage afin de recevoir des données dudit ou desdits plusieurs autres dispositifs de stockage.
- recevoir dans le premier dispositif de stockage (N1) une ou plusieurs réponses de l'un ou de plusieurs autres dispositifs de stockage ;
- sélectionner un deuxième dispositif de stockage (N2) parmi l'un ou plusieurs des autres dispositifs de stockage desquels la réponse a été reçue ;
- lorsque l'espace de stockage disponible restant du premier dispositif (N1) est inférieur à un seuil, mettre en mémoire tampon en parallèle au premier dispositif de stockage (N1) dans le deuxième dispositif de stockage sélectionné (N2) le flux de données entrant dans le deuxième support de stockage (IB2) ;
- lorsque le premier dispositif de stockage (N1) est plein, envoyer (CMB) du premier dispositif de stockage (N1) au deuxième dispositif de stockage (N2) un identifiant de la dernière unité de données (SOBU#i - 1) stockée sur le premier support de stockage (D1), et stocker l'identifiant avec le premier ensemble de données (10) dans le premier dispositif de stockage (N1) ;
- détecter dans le deuxième support de stockage (IB2), du deuxième dispositif de stockage (N2) l'identifiant de la dernière unité de données (SOBU#i-1) stockée sur le premier support de stockage (D1) dans ledit flux de données stocké ;
- suite à ladite détection, stocker sur un troisième support de stockage (D2) dans le deuxième dispositif de stockage (N2) une deuxième partie du flux de données (19) contenant des unités de données suivantes, et créer et stocker un deuxième ensemble de données (11) associé à la deuxième partie du flux de données (19), l'ensemble de données (11) contenant un identifiant (PlaycellUUID2) de la deuxième partie du flux de données ; et
- stocker au moins un des identifiants (PlaycellUUID1, PlaycellUUID2) avec l'autre ensemble de données (10, 11) dans l'autre dispositif de stockage (N1, N2).

2. Méthode selon la revendication 1, dans laquelle l'étape consistant à sélectionner un deuxième dispositif de stockage (N2) parmi l'un ou plusieurs des autres dispositifs de stockage est basée sur une capacité de stockage disponible, une vitesse d'enregistrement possible ou un type de contenu à stocker.

3. Une méthode permettant de récupérer des parties successives d'un flux de données contiguës d'une pluralité de dispositifs de stockage, le flux de données étant constitué d'unités de données identifiables comme des paquets, comprenant les étapes consistant à
- récupérer une première partie du flux de données d'un premier dispositif de stockage (N1), et la transmettre sur un bus de sortie (APB) ;
- récupérer dans le premier dispositif de stockage (N1) un ensemble de données (10) associé à la première partie du flux de données, l'ensemble de données contenant un premier et un second identifiant, le premier identifiant étant un identifiant (PlaycellUUID1) de la première partie du flux de données ou un identifiant (PlaycellUUID2) d'une deuxième partie du flux de données, et le second identifiant étant un identifiant de la dernière unité de données contenue dans ladite première partie du flux de données ;
- envoyer (CMB) les premier et second identifiants du premier dispositif de stockage (N1) à l'autre de ladite pluralité de dispositifs de stockage ;
- détecter dans un deuxième dispositif de stockage (N2) que la deuxième partie du flux de données identifiée par le premier identifiant reçu (PlaycellUUID1, PlaycellUUID2) est disponible pour une récupération d'un support de stockage (D2) ;
- récupérer dans le deuxième dispositif de stockage (N2) au moins le début de ladite deuxième partie du flux de données d'un support de stockage (D2) et le mettre en mémoire tampon dans un autre support de stockage (OB2) ;
- contrôler dans le deuxième dispositif de stockage (N2) la connexion de sortie (APB) du premier dispositif de stockage (N1) ;
- en se basant sur ledit contrôle, détecter dans le deuxième dispositif de stockage (N2) le moment où ladite dernière unité de données de la première partie du flux de données est transmise à la connexion de sortie (APB) ; et
- suite à ladite détection, lire la deuxième partie du flux de données dudit autre support de stockage (OB2) et la transmettre via la connexion de sortie (APB).

4. Méthode selon une quelconque des revendications 1 à 3, dans laquelle l'ensemble de données (10) associé à la première partie du flux de données contient en outre un identifiant d'un deuxième dispositif de stockage (N2).

5. Méthode selon une quelconque des revendications 1 à 4, dans laquelle le support de stockage comprend des mémoires (IB1, IB2, OB1, OB2) et des disques optiques ou magnétiques (D1, D2).

6. Méthode selon une quelconque des revendications précédentes, dans laquelle les dispositifs de stockage (N1, N2) sont des noeuds dans un réseau.

7. Méthode selon une quelconque des revendications précédentes, dans laquelle les unités de données identifiables contiennent une série monotone de valeurs numériques ou d'estampilles temporelles.

8. Méthode selon une quelconque des revendications précédentes, dans laquelle le message envoyé du premier (N1) au deuxième (N2) dispositif de stockage contient des informations sur l'emplacement de stockage de la deuxième partie du flux de données.

9. Appareil permettant de stocker un flux de données, l'appareil étant un noeud dans un réseau décentralisé, le flux de données étant constitué d'unités de données identifiables, comprenant
- un premier support de stockage (IB2) étant une mémoire pour une mise en mémoire tampon, suite à une réception d'une notification, d'une partie du flux de données reçu ;
- un moyen (SRU2) pour transférer des données lues du premier support de stockage (IB2) à un deuxième support de stockage (D2) ;
- un moyen (MC2) pour recevoir d'un autre noeud dudit réseau décentralisé une demande d'espace de stockage, répondre à la demande et recevoir dudit autre noeud un identifiant de la dernière unité de données stockée sur ledit autre noeud, le moyen (MC2) étant également capable d'envoyer une demande d'espace de stockage à un ou plusieurs noeuds dudit réseau décentralisé lorsque l'espace de stockage disponible restant sur le deuxième support de stockage (D2) est inférieur à un seuil, de recevoir une pluralité de réponses de différents dispositifs et en se basant sur l'évaluation desdites réponses, de sélectionner un des dispositifs de réponse ;
- un moyen pour détecter si l'unité de données identifiée par ledit identifiant reçu est stockée dans le premier support de stockage (IB2) ;
- un moyen pour commencer, suite à une détection de l'unité de données identifiée par ledit identifiant reçu, le transfert d'unités de données consécutives à ladite unité de données du premier (IB2) au deuxième (D2) support de stockage ; et
- un moyen pour créer et stocker un ensemble de données (11) associé au flux de données, l'ensemble de données (11) contenant un identifiant (PlaylistUUID) du flux de données, un identifiant de la dernière unité de données stockée sur le deuxième support de stockage (D2) et un identifiant d'un flux de données stocké sur ledit autre noeud.

10. Appareil permettant de récupérer une partie d'un flux de données, où l'appareil est un noeud d'un réseau décentralisé, et où le flux de données est constitué d'unités de données identifiables, comprenant
- un moyen (PU2) pour lire des données d'un premier support de stockage (D2) ;
- un deuxième support de stockage (OB2) étant une mémoire ;
- un moyen (MC2) pour recevoir d'un autre noeud dudit réseau décentralisé un premier identifiant étant un identifiant d'une première partie du flux de données stocké sur ledit autre noeud, et un second identifiant étant un identifiant de la dernière unité de données contenue dans ladite première partie du flux de données ;
- un moyen pour transférer des données lues du premier support de stockage (D2) au deuxième support de stockage (OB2), où le moyen transfère initialement le début du flux de données lu, du premier support de stockage au deuxième support de stockage (OB2), après qu'il ait été détecté que la deuxième partie du flux de données identifiée par le premier identifiant reçu est disponible pour une récupération du premier support de stockage (D2) ;
- un moyen (IB2) pour recevoir des données d'une connexion de données (APB) ;
- un moyen (BCU2) pour contrôler lesdites données reçues de la connexion de données (APB), détecter si la dernière unité de données contenue dans ladite première partie du flux de données est reçue sur la connexion de données (APB) et,suite à ladite détection, commencer le transfert des unités de données du deuxième (D2) au premier (OB2) support de stockage ; et
- un moyen pour émettre des unités de données du premier support de stockage (OB2) à ladite connexion de données (APB).
